# EUROPÄISCHE PATENTSCHRIFT

(11) **EP 2 400 611 B1**
(45) Veröffentlichungstag und Bekanntmachung des Hinweises auf die Patenterteilung: **08.10.2014**
(21) Anmeldenummer: 11007650.2
(22) Anmeldetag: 30.06.2005
(51) Int. Cl.: H02B 1/42

(54) **Verteiler der Elektroinstallation**
Power distribution panel
Tableau de distribution électrique

(30) Priorität: 06.07.2004 DE 102004032864
(43) Veröffentlichungstag der Anmeldung: 28.12.2011
(62) Teilanmeldung aus: 05014262.9
(73) Patentinhaber: Hager Electro GmbH, 66131 Saarbrücken (DE)
(72) Erfinder: Dissel, Klaus, 66131 Saarbrücken (DE); Zimmermann, Manfred, 66131 Saarbrücken (DE); Theuer, Markus, 66131 Saarbrücken (DE)
(74) Vertreter: Nuss, Laurent

(56) Entgegenhaltungen:
- EP-A1- 0 017 124
- EP-A1- 0 472 409
- EP-A1- 1 359 650
- DE-T2- 69 405 681
- FR-A1- 2 571 183

## Beschreibung

Die Erfindung geht aus von einem Verteiler der Elektroinstallation mit mindestens einer zur Halterung mindestens eines Gerätes, insbesondere Schutzschalters, dienenden Hutschiene oder Montageplatte, für die an einem Unterbau im Abstand voneinander zwei Abstützungen angeordnet sind, an der sie befestigt sind.

Die Abstützungen, an denen die Hutschienen oder eine Montageplatte angeschraubt sind, befinden sich in der Regel an zwei senkrechten Leisten des Unterbaues. Die Geräte werden durch die Abstützungen in Abstand von der Rückwand eines Verteilerkastens o. dgl., ggf. auch einer Gebäudewand, gehalten. In dem Zwischenraum werden die Leitungen von oben und/oder unten her an die Geräte gelegt. Zum grossen Teil müssen sie dabei hinter mehreren übereinander angeordneten Hutschienen oder Montageplatten mit darauf sitzenden Geräten hindurchgeführt werden. Die EP 0017124 offenbart einen derartigen Verteiler.

Der Erfindung liegt die Aufgabe zugrunde, die Montage zu vereinfachen.

Gemäss der Erfindung wie in den Ansprüchen beschrieben wird dieser Zweck bei einem Verteiler der eingangs genannten Art dadurch erfüllt, dass die Abstützungen einerseits und die Hutschiene oder Montageplatte oder an dieser angeordnete Kupplungsteile andererseits gegenseitige Anpassungen aufweisen, die gemeinsam mit mindestens einer sie zusammenhaltenden, entriegelbaren Raste einen festen Sitz bilden.

Durch Entriegeln der Raste kann hier eine vollständig mit Geräten besetzte Hutschiene abgenommen werden, um die hinter ihr zu verlegenden Leitungen zu legen.

Anschliessend kann sie leicht und schnell wieder angesetzt werden. Dann werden die Geräte angeschlossen. Im Gegensatz zu den bisherigen Schraubbefestigungen, die durch aufgesetzte Geräte verdeckt sind, sind die hinter der Hutschiene an den Abstützungen angeordneten Rasten zugänglich. Sie lassen sich auch hinter den Geräten noch mit einem Finger erreichen. Dementsprechend sind sie vorzugsweise von Hand entriegelbar und, zusammen betrachtet, an den Aussenseiten der beiden Abstützungen angeordnet, wo sie mit dem Zeigefinger oder Mittelfinger der linken und der rechten Hand gleichzeitig gedrückt werden können und die Hände dabei die Hutschiene mit den auf ihr sitzenden Geräten fassen und abnehmen können. Für eine Montageplatte, die in der Regel nur ein Gerät aufweist, gilt Entsprechendes.

Bevorzugt weisen in der an sich bekannten Weise zwei senkrechte Leisten des Unterbaues die Abstützungen auf.

In einer ersten Ausführungsform haben die Kupplungsteile die Form eines Pyramidenstumpfes und die Abstützungen die Form eines offenen Kastens, an dessen Seitenwände innen Rippen, nach unten stärker vorspringend, ausgebildet sind, an denen das Kupplungsteil anliegt. Die Raste ist dann vorzugsweise eine in einer Wand des Pyramidenstumpfes ausgebildete federnde Zunge mit einem nach aussen abgewinkelten Riegelelement, das in eine Ausnehmung einer Seitenwand der Abstützung greift.

In einer zweiten Ausführungsform haben die Abstützungen die Form eines hohlen Blockes, auf dem das Kupplungsteil aufliegt und an dem es an einer Seitenwand mit einem flachen Schenkel anliegt, in dem als die Raste eine federnde Zunge mit einem abgewinkelten Riegelelement ausgebildet ist, das in eine Ausnehmung der Seitenwand des Blockes greift. Vorzugsweise greift hier das Kupplungsteil ausserdem von der Auflagefläche her mit einem Bolzen in eine in dem Block ausgebildete Aufnahme.

In einer dritten Ausführungsform haben die Kupplungsteile die Form eines U-Profils und die Abstützungen sind Abschnitte von Leisten des Unterbaues und werden von dem U-Profil von oben umfasst; in dem einen U-Schenkel sind als die mindestens eine Raste zwei federnde Zungen mit einem nach innen abgewinkelten Riegelelement ausgebildet, das jeweils in eine Ausnehmung einer Seitenwand de Leiste greift. Eine der beiden Rasten ist vorzugsweise nahe dem einen Ende des U-Profils angeordnet.

Hier kann die Hutschiene oder Montageplatte nach Entriegeln der einen Rasten unter Beibehaltung der zweiten Rastung von der Wand abgeschwenkt werden, womit ebenfalls der Zwischenraum zur Wand vergrössert wird und im übrigen die an der abgeschwenkten Seite befindlichen Anschlusskontakte der Geräte leichter zugänglich sind. Um die Hutschiene oder Montageplatte ganz abzunehmen, wird auch die zweite Verrastung gelöst.

Eine vorteilhafte Ausgestaltung dieser Ausführungsform besteht darin, dass die Ausnehmung für die eine Raste in Abständen mehrfach vorhanden ist und die Ausnehmung für die andere Raste aus einem Langloch besteht. Damit ist es möglich, die Hutschiene nach der einen oder der anderen Seite zu versetzen, um auf der gegenüberliegenden Seite mehr Platz für das Anschliessen der Geräte zu schaffen.

In einer vierten Ausführungsform haben die Abstützungen die Form eines hohlen Blockes, auf dem die Hutschiene unmittelbar aufliegt. Zur gegenseitigen Anpassung weist hier der Block eine die Hutschiene auf einem Teil ihrer Höhe seitlich einfassende Einsenkung auf und deren Boden weist eine weitere Einsenkung auf, in die sich eine Ausprägung der Hutschiene nach unten legt; eine seitlich des Blockes angeordnete Biegefeder, vorzugsweise aus Stahl, fasst durch einen Ausschnitt in der Hutschiene hindurch und mit einem abgewinkelten Riegelelement über den Boden der Hutschiene.

Die Zeichnungen geben Ausführungsbeispiele der Erfindung wieder.
Fig. 1 : zeigt einen Ausschnitt aus einem ersten Verteiler,
Fig. 2 : zeigt etwa den in Fig. 1 gezeigten Ausschnitt in auseinandergezogener Darstellung,
Fig. 3 : zeigt einen Ausschnitt aus einem weiteren Verteiler in auseinandergezogener Darstellung,
Fig. 4 : zeigt eine Einzelheit aus Fig. 3 unter anderem Blickwinkel,
Fig. 5 : zeigt einen Ausschnitt aus einem weiteren Verteiler,
Fig. 6 : zeigt einen Ausschnitt aus dem Verteiler nach Fig. 5 in auseinandergezogener Darstellung,
Fig. 7 : zeigt einen weiteren Verteiler in einer Montagestellung,
Fig. 8 : zeigt den Verteiler nach Fig. 7 in einer anderen Montagestellung.

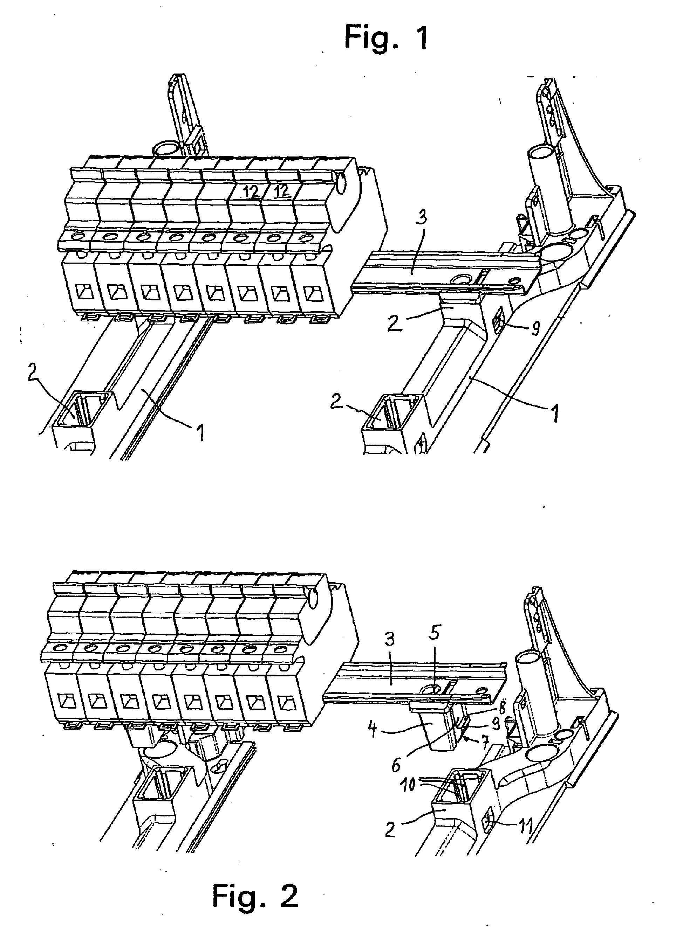

Fig. 1 lässt zwei Leisten 1 erkennen, die in bekannter Weise an der Rückwand eines Verteilerschrankes o. dgl., beispielsweise aber auch unmittelbar an einer Gebäudewand, befestigt sind.

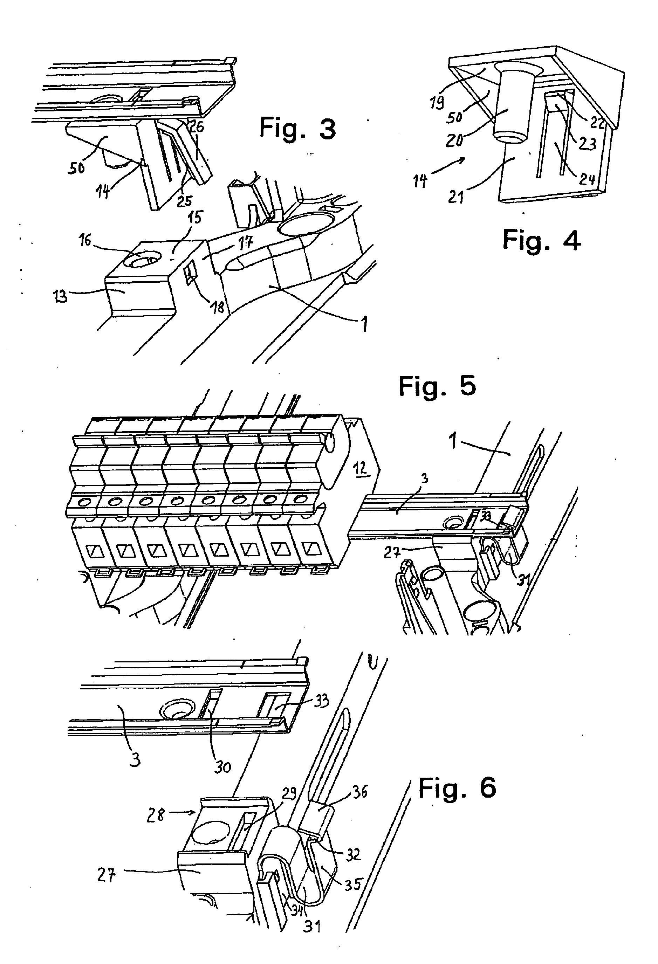

An den Leisten 1 sind Abstützungen 2 für eine Hutschiene 3 ausgebildet. Die Hutschiene 3 ist zur Befestigung an den Abstützungen 2 mit Kupplungsteilen 4 versehen. Die Kupplungsteile 4 und die Hutschiene 3 sind in der zu Fig. 5 und 6 näher beschriebenen Weise einander angepasst und bei 5 durch eine Schraube miteinander verbunden.

Die Kupplungsteile 4 sind als hohle Pyramidenstümpfe mit rechteckiger Grundfläche gestaltet. In der Wand der einen Breitseite ist, im Prinzip in der aus Fig. 4 ersichtlichen Weise, durch Einschnitte eine biegsame Zunge 6 geschaffen. An dieser ist ein eine Schrägfläche 7 und eine Haltefläche 8 aufweisendes Riegelelement 9 ausgebildet.

Die Abstützungen 2 sind, ebenfalls in hohler Ausführung, quaderförmig. An jeder Seitenwand sind innen zwei Rippen 10 angeformt. Die Rippen 10 treten nach unten fortschreitend aus der Wand heraus dergestalt, dass sie für die Pyramidenflächen des Kupplungsteils 4 Anlageflächen gleicher Neigung und insgesamt für das Kupplungsteil 4 eine angepasste Aufnahme bieten.

Werden die beiden Kupplungsteile 4 in die Abstützungen 2 eingesetzt, so drückt sich jeweils durch Anstoss der Schrägfläche 7 an der Wand der Abstützung 2 die Zunge 6 mit dem Riegelelement 9 zurück. Das Riegelelement rutscht an der Wand entlang. In der Endstellung erreicht es eine Ausnehmung 11 in der Wand der Abstützung 2 und schnappt in diese ein. Die Haltefläche 8 sichert dann einen festen Sitz des Kupplungsteils 4 in der Abstützung 2.

Soll die, vollständig mit Modulargeräten 12 besetzt zu denkende, Hutschiene 3 entfernt werden, so wird sie beidhändig mit nach vorne gekehrter Handfläche hintergriffen und mit dem Mittelfinger oder Zeigefinger das jeweilige Riegelelement 9 aus der Ausnehmung 11 heraus zurückgedrückt und darauf die Hutschiene 3 mit den Modulargeräten 12 abgehoben. Auch bei Anordnung des Verteilers eng am Rand einer Wand bleibt genügend Platz für den zur Entriegelung benutzten Finger und seine Bewegung.

In Fig. 3 und 4 ist eine gegenüber Fig. 1 und 2 abgewandelte Kombination einer Abstützung 13 mit einem Kupplungsteil 14 dargestellt.

Die Abstützung 13 hat äusserlich die Form eines Blockes. In der Decke 15 des hohl ausgeführten Blockes befindet sich eine runde Ausnehmung 16, in der einen Seitenwand 17 eine viereckige Ausnehmung 18.

Das Kupplungsteil 14 ist gewinkelt. Ein Winkelschenkel 19 liegt auf der Decke 15, wobei ein Bolzen 20 zentrierend in die Ausnehmung 16 ragt. Der andere Winkelschenkel 21 liegt an der Seitenwand 17 an; dabei greift ein Riegelelement 22 in die Ausnehmung 18. Zwei dreieckige Seitenwände 50 zwischen den Winkelschenkeln 19 und 21 dienen der Versteifung. Das, wiederum mit einer Schrägfläche 23 versehene, Riegelelement 22 ist an einer durch einen U-förmigen Ausschnitt in dem Winkelschenkel 21 geschaffenen Zunge 24 ausgebildet. An der Aussenseite der Zunge 24 ist ein mit einer Versteifungsrippe 25 versehener Bügel 26 angeformt.

Auch hier wird bei der Montage die Zunge 24 durch Anstoss der Schrägfläche 23 an der Kante und Seitenwand 17 der Abstützung 13 zurückgedrückt, bis sie einrastet. Zum Verbiegen der Zunge 24 nach aussen und Herausziehen des Riegelelements 22 aus der Ausnehmung 18 wird nahe seinem Ende auf den Bügel 26 gedrückt.

Auch nach Fig. 5 und 6 ist als, hier mit 27 bezeichnete, Abstützung ein hohler Block vorgesehen. Der Block ist der Hutschiene 3 und diese ist ihm unmittelbar angepasst: Er weist eine Einsenkung 28 auf, die die Hutschiene 3 an zwei Seiten einfasst, und darüber hinaus eine weitere Einsenkung 29, die eine Ausprägung 30 der Hutschiene nach unten aufnimmt. Die Einsenkung 28 fixiert die Hutschiene 3 in Querrichtung, die Einsenkung 29 und Ausprägung 30 fixieren sie in Längsrichtung. Durch eine Biegefeder 31 mit einem Riegelelement 32 wird die Hutschiene 3 auf der Abstützung 27 gehalten, indem die Biegefeder 31 durch einen Ausschnitt 33 in der Hutschiene tritt und das Riegelelement 32 neben dem Ausschnitt 33 über dem Boden der Hutschiene liegt. Die Biegefeder 32 ist S-förmig gebogen und mit ihrem einen Endschenkel 34 befestigt. Am Ende des anderen Endschenkels 35 ist das, wiederum mit einer Schrägfläche 36 versehene, Riegelelement 32 abgewinkelt. Auf den Endschenkel 35 wird mit dem Finger gedrückt, um den Sitz der Hutschiene 3 auf der Abstützung 27 zu entriegeln und die Hutschiene 3 mit den Modulargeräten 12 abzunehmen.

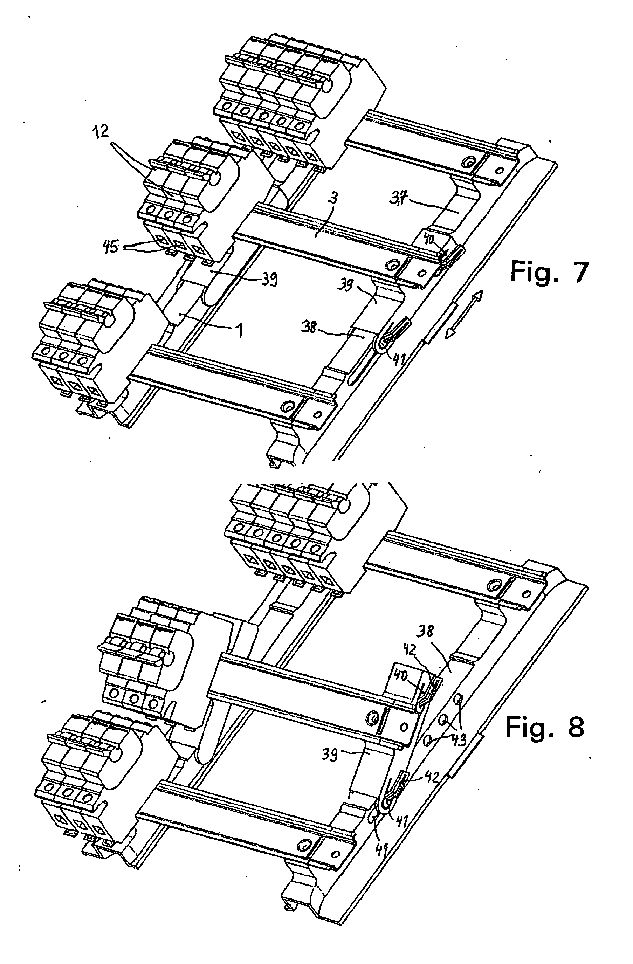

Fig. 7 und 8 zeigen den Leisten 1 in Fig. 1 und 2 entsprechende Leisten 37, die auf einem mittleren Abschnitt 38 ohne eine Erhöhung die Abstützung darstellen. Zwei an der Hutschiene 3 befestigte U-Profile 39 dienen hier als Kupplungsteile. Die Rasten bestehen aus durch U-förmige Einschnitte in dem äusseren Seitenschenkel der U-Profile geschaffenen Zungen 40, 41, an denen nach innen als Riegelelement ein flacher Bolzen und nach aussen ein dem Bügel 26 entsprechender Bügel 42 für das Entriegeln angeformt ist. Den Zungen 40 und ihren Bolzen sind in den Leisten 37 jeweils drei Löcher 43 zugeordnet, von denen das mittlere für die Normalstellung vorgesehen ist. Der Bolzen der Zungen 41 greift jeweils in ein Langloch 44. Die beiden äusseren Löcher 43 erlauben unter Beibehaltung des Eingriffs in dem Langloch 44 die Fixierung der Hutschiene 3 in einer verschobenen Lage, wie in Fig. 8 dargestellt. Damit wird auf der einen Seite Platz geschaffen, um die Anschlusskontakte besser zugänglich zu machen für die Verdrahtung. Zum Abheben der Hutschiene 3 wird an den Zungen 40 entriegelt und, wiederum unter Beibehaltung des Eingriffs in dem Langloch 44, die Hutschiene 3 mit den auf ihr sitzenden Modulargeräten 12 hochgeschwenkt.

Durch entsprechendes Betätigen der Zungen 41 lässt sich die Hutschiene 3 mit den Modulargeräten 12 ganz abnehmen.

Mit Ausnahme der Hutschienen 3 und der Biegefeder 31 sind alle beschriebenen Elemente des Verteilers Spritzgussteile aus Kunststoff.

## Patentansprüche

1. Verteiler der Elektroinstallation mit mindestens einer zur Halterung mindestens eines Gerätes (12), insbesondere Schutzschalters (12), dienenden Hutschiene (3) oder Montageplatte, für die an einem Unterbau in Abstand voneinander zwei Abstützungen (2 ; 13 ; 27 ; 38) angeordnet sind, an der sie befestigt ist, wobei
die Abstützungen (2 ; 13 ; 27 ; 38) einerseits und die Hutschiene (3) oder Montageplatte oder an dieser angeordnete Kupplungsteile (4 ; 14 ; 39) andererseits gegenseitige Anpassungen aufweisen, die gemeinsam mit mindestens einer sie zusammenhaltenden, entriegelbaren Raste (6, 9 ; 22, 24 ; 40, 41) einen festen Sitz bilden, **dadurch gekennzeichnet, dass**
die Rasten (6, 9 ; 22, 24 ; 40, 41) von Hand entriegelbar sind, insbesondere mit dem Mittelfinger oder Zeigefinger, und dass
die Rasten (6, 9 ; 22, 24 ; 40, 41) hinter der Hutschiene (3) angeordnet sind.

2. Verteiler nach Anspruch 1, **dadurch gekennzeichnet,**
**dass** die Rasten (6, 9 ; 22, 24 ; 40, 41) an den, zusammen betrachtet, Aussenseiten der beiden Abstützungen (2 ; 13 ; 27 ; 38) angeordnet sind, wobei bevorzugt in an sich bekannter Weise zwei Leisten (1 ; 37) des Unterbaues die Abstützungen (2 ; 13 ; 27 ; 38) aufweisen.

3. Verteiler nach einem der Ansprüche 1 bis 2, **dadurch gekennzeichnet, dass** die Kupplungsteile (4) die Form eines Pyramidenstumpfes und die Abstützungen (2) die Form eines offenen Kastens haben, an dessen Seitenwänden innen Rippen (10), nach unten stärker vorspringend, ausgebildet sind, an denen das Kupplungsteil (4) anliegt.

4. Verteiler nach Anspruch 3, **dadurch gekennzeichnet, dass** die Raste (6, 9) eine in einer Wand des Pyramidenstumpfes ausgebildete federnde Zunge (6) mit einem nach aussen abgewinkelten Riegelelement (9) ist, das in eine Ausnehmung (11) einer Seitenwand der Abstützung (2) greift.

5. Verteiler nach einem der Ansprüche 1 bis 2, **dadurch gekennzeichnet, dass** die Abstützungen (13) die Form eines hohlen Blockes haben, auf dem das Kupplungsteil (14) aufliegt und an dem es an einer Seitenwand (17) mit einem flachen Schenkel (21) anliegt, in dem als die Raste (22, 24) eine federnde Zunge (24) mit einem abgewinkelten Riegelelement (22) ausgebildet ist, das in eine Ausnehmung (18) der Seitenwand (17) des Blockes greift.

6. Verteiler nach Anspruch 5, **dadurch gekennzeichnet, dass** das Kupplungsteil (14) von der Auflagefläche her mit einem Bolzen (20) in eine in dem Block ausgebildete Aufnahme (16) greift.

7. Verteiler nach einem der Ansprüche 1 bis 2, **dadurch gekennzeichnet, dass** die Kupplungsteile (39) die Form eines U-Profils haben und die Abstützungen Abschnitte (38) von Leisten (37) des Unterbaues sind und von dem U-Profil von oben her umfasst werden und dass in dem einen U-Schenkel als die mindestens eine Raste zwei federnde Zungen (41 ; 42) mit einem nach innen abgewinkelten Riegelelement ausgebildet sind, das jeweils in eine Ausnehmung (43) einer Seitenwand der Leiste (37) greift.

8. Verteiler nach Anspruch 7, **dadurch gekennzeichnet, dass** die Ausnehmung (43) für die eine Raste (40) in Abständen mehrfach vorhanden ist und die Ausnehmung für die andere Raste (41), die vorzugsweise nahe dem einen Ende des U-Profils angeordnet ist, aus einem Langloch (44) besteht.

9. Verteiler nach einem der Ansprüche 1 bis 2, **dadurch gekennzeichnet, dass**
die Rasten an den Abstützungen angeordnet sind.

10. Verteiler der Elektroinstallation mit mindestens einer zur Halterung mindestens eines Gerätes (12), insbesondere Schutzschalters (12), dienenden Hutschiene (3) oder Montageplatte, für die an einem Unterbau in Abstand voneinander zwei Abstützungen (27) angeordnet sind, an der sie befestigt ist, wobei
die Abstützungen (27) einerseits und die Hutschiene (3) oder Montageplatte oder an dieser angeordnete Kupplungsteile andererseits gegenseitige Anpassungen aufweisen, die gemeinsam mit mindestens einer sie zusammenhaltenden, entriegelbaren Raste (31, 32) einen festen Sitz bilden, **dadurch gekennzeichnet, dass**
die Abstützungen (27) die Form eines hohlen Blockes haben, auf dem die Hutschiene (3) unmittelbar aufliegt, wobei
der Block eine die Hutschiene (3) auf einem Teil ihrer Höhe seitlich einfassende Einsenkung (28) aufweist und an deren Boden eine weitere Einsenkung (29) aufweist, in die sich eine Ausprägung (30) der Hutschiene (3) nach unten legt, und dass
als die Raste eine seitlich des Blockes angeordnete Biegefeder (31) durch einen Ausschnitt (33) in der Hutschiene (3) hindurch und mit einem abgewinkelten Riegelelement (32) über den Boden der Hutschiene (3) fasst, dass
die Rasten (31, 32) von Hand entriegelbar sind, insbesondere mit dem Mittelfinger oder Zeigefinger, und dass
die Rasten (31, 32) hinter der Hutschiene (3) angeordnet sind.

11. Verteiler nach Anspruch 10, **dadurch gekennzeichnet, dass** die Rasten (31, 32) an den, zusammen betrachtet, Aussenseiten der beiden Abstützungen (27) angeordnet sind, wobei bevorzugt in an sich bekannter Weise zwei Leisten (1 ; 37) des Unterbaues die Abstützungen (27) aufweisen.

12. Verteiler nach einem der Ansprüche 10 bis 11, **dadurch gekennzeichnet, dass**
die Rasten an den Abstützungen angeordnet sind.

## Claims

1. Distribution panel for electric installation with at least one top-hat rail (3) or assembly plate being configured to hold at least one device (12), in particular circuit-breaker (12), for which two supports (2; 13; 27; 38) are arranged on a substructure at a spacing from one another, on which it is fastened, wherein the supports (2; 13; 27; 38), on the one hand, and the top-hat rail (3) or assembly plate or coupling part (4; 14; 39) arranged thereon, on the other hand, have mutual adaptations, which, together with at least one unlockable catch (6, 9; 22, 24; 40, 41) holding them together, form a firm seat, **characterised in that** the catches (6, 9; 22, 24; 40, 41) can be unlocked by hand, in particular with the middle finger or index finger, and **in that** the catches (6, 9; 22, 24; 40, 41) are arranged behind the top-hat rail (3).

2. Distribution panel according to claim 1, **characterised in that** the catches (6, 9; 22, 24; 40, 41) are arranged on the, viewed together, outsides of the two supports (2; 13; 27; 38), two strips (1; 37) of the substructure, in a manner known *per se,* preferably having the supports (2; 13; 27; 38).

3. Distribution panel according to either of claims 1 or 2, **characterised in that** the coupling parts (4) have the shape of a truncated pyramid and the supports (2) have the shape of an open box, on the side walls of which ribs, projecting more strongly downwardly, are formed on the inside, on which ribs the coupling part (4) rests.

4. Distribution panel according to claim 3, **characterised in that** the catch (6, 9) is a resilient tongue (6) formed in a wall of the truncated pyramid with a bar element (9), which is angled outwardly and engages in a recess (11) of a side wall of the support (2).

5. Distribution panel according to either of claims 1 or 2, **characterised in that** the supports (13) have the shape of a hollow block, on which the coupling part (14) rests and on which the latter rests on a side wall (17) with a flat leg (21), in which a resilient tongue (24) with an angled bar element (22) is formed as the catch (22, 24), said bar element engaging in a recess (18) of the side wall (17) of the block.

6. Distribution panel according to claim 5, **characterised in that** the coupling part (14) engages from the support face with a bolt (20) in a receiver (16) formed in the block.

7. Distribution panel according to either of claims 1 or 2, **characterised in that** the coupling parts (39) have the shape of a U-profile and the supports are portions (38) of strips (37) of the substructure and are encompassed from above by the U-profile and **in that** two resilient tongues (41; 42) with an inwardly angled bar element are formed in the one U-leg as the at least one catch, said bar element engaging in each case in a recess (43) of a side wall of the strip (37).

8. Distribution panel according to claim 7, **characterised in that** the recess (43) for the one catch (40) is repeatedly present at intervals and the recess for the other catch (41), which is preferably arranged close to the one end of the U-profile, consists of a slot (44).

9. Distribution panel according to either of claims 1 or 2, **characterised in that** the catches are arranged on the supports.

10. Distribution panel for electric installation with at least one top-hat rail (3) or assembly plate being configured to hold at least one device (12), in particular circuit-breaker (12), for which two supports (27) are arranged on a substructure at a spacing from one another, on which it is fastened, wherein the supports (27), on the one hand, and the top-hat rail (3) or assembly plate or coupling parts arranged thereon, on the other hand, have mutual adaptations, which, together with at least one unlockable catch (31, 32) holding them together, form a firm seat, **characterised in that** the supports (27) have the shape of a hollow block, on which the top-hat rail (3) directly rests, wherein the block has a depression (28) laterally encompassing the top-hat rail (3) on a part of its height and, on the base thereof, has a further depression (29), into which a shaping (30) of the top-hat rail (3) is downwardly placed, and **in that** a flexible spring (31) arranged to the side of the block as the catch engages through a cutout (33) in the top-hat rail (3) and with an angled bar element (32) over the base of the top-hat rail (3), **in that** the catches (31, 32) can be unlocked by hand, in particular with the middle finger or index finger, and **in that** the catches (31, 32) are arranged behind the top-hat rail (3).

11. Distribution panel according to claim 10, **characterised in that** the catches (31, 32) are arranged on the, viewed together, outsides of the two supports (27), two strips (1; 37) of the substructure preferably having, in a manner known *per se,* the supports (27).

12. Distribution panel according to either of claims 10 or 11, **characterised in that** the catches are arranged on the supports.

## Revendications

1. Répartiteur d'une installation électrique comprenant au moins un profilé chapeau (3) ou une plaque de montage servant à fixer au moins un appareil (12), en particulier un disjoncteur de protection (12), pour lequel ou laquelle deux supports (2 ; 13 ; 27 ; 38) sont disposés sur une base, à distance l'un de l'autre, supports sur lesquels le profilé chapeau (3) ou la plaque de montage est fixé(e), les supports (2 ; 13 ; 27 ; 38), d'une part, et le profilé chapeau (3) ou la plaque de montage, ou des parties d'accouplement (4 ; 14 ; 39) disposées sur celui-ci ou celle-ci d'autre part, présentant des ajustements réciproques qui, conjointement avec au moins un cran d'arrêt (6, 9 ; 22, 24 ; 40, 41) déverrouillable, les maintenant ensemble, forment un siège fixe, **caractérisé en ce que** les crans d'arrêt (6, 9 ; 22, 24 ; 40, 41) peuvent être déverrouillés à la main, notamment avec le majeur ou l'index, et **en ce que** les crans d'arrêt (6, 9 ; 22, 24 ; 40, 41) sont agencés à l'arrière du profilé chapeau (3).

2. Répartiteur selon la revendication 1, **caractérisé en ce que** les crans d'arrêt (6, 9 ; 22, 24 ; 40, 41) sont disposés sur les côtés extérieurs des deux supports (2 ; 13 ; 27 ; 38) vus ensemble, de préférence deux baguettes (1 ; 37) de l'infrastructure étant munies, de façon connue, des supports (2 ; 13 ; 27 ; 38).

3. Répartiteur selon l'une quelconque des revendications 1 à 2, **caractérisé en ce que** les parties d'accouplement (4) ont la forme d'un tronc de pyramide et les supports (2) ont la forme d'une caisse ouverte, sur les parois latérales de laquelle sont réalisées, à l'intérieur, des nervures (10), dépassant plus fortement vers le bas, contre lesquelles la partie d'accouplement (4) s'appuie.

4. Répartiteur selon la revendication 3, **caractérisé en ce que** le cran d'arrêt (6, 9) est une lame (6) faisant ressort, formée dans une paroi de la pyramide tronquée, avec un élément de verrou (9) coudé vers l'extérieur, qui s'engage dans un évidement (11) d'une paroi latérale du support (2).

5. Répartiteur selon l'une quelconque des revendications 1 à 2, **caractérisé en ce que** les supports (13) ont la forme d'un bloc creux, sur lequel la partie d'accouplement (14) repose et contre lequel elle s'appuie sur une paroi latérale (17) avec une branche (21) plate, dans laquelle est formée une lame (24) faisant ressort avec un élément de verrou (22) coudé, formant le cran d'arrêt (22, 24), ledit élément de verrou (22) s'engageant dans un évidement (18) de la paroi latérale (17) du bloc.

6. Répartiteur selon la revendication 5, **caractérisé en ce que** la partie d'accouplement (14) s'engage à partir de la surface d'appui avec un plot (20) dans un évidement (16) réalisé dans le bloc.

7. Répartiteur selon l'une quelconque des revendications 1 à 2, **caractérisé en ce que** les parties d'accouplement (39) ont la forme d'un profil en U et les supports sont des sections (38) de baguettes (37) de la base et sont entourés par le profil en U par en haut et **en ce que** deux lames (41 ; 42), faisant ressort avec un élément de verrou coudé vers l'intérieur, sont réalisées dans l'une des branches en U en tant que l'au moins un cran d'arrêt, lequel élément de verrou s'engage à chaque fois dans un évidement (43) d'une paroi latérale de la baguette (37).

8. Répartiteur selon la revendication 7, **caractérisé en ce que** l'évidement (43) pour l'un des crans d'arrêt (40) est présent à plusieurs reprises à certains intervalles, et l'évidement pour l'autre cran d'arrêt (41), qui est disposé de préférence à proximité de l'une des extrémités du profil en U, est constitué d'un trou oblong (44).

9. Répartiteur selon l'une quelconque des revendications 1 à 2, **caractérisé en ce que** les crans d'arrêt sont agencés sur les supports.

10. Répartiteur d'une installation électrique comprenant au moins un profilé chapeau (3) ou une plaque de montage servant à fixer au moins un appareil (12), en particulier un disjoncteur de protection (12), pour lequel ou laquelle deux supports (27) sont disposés sur une base, à distance l'un de l'autre, supports sur lesquels le profilé chapeau (3) ou la plaque de montage est fixé(e), les supports (27), d'une part, et le profilé chapeau (3) ou la plaque de montage, ou des parties d'accouplement disposées sur celui-ci ou celle-ci d'autre part, présentant des ajustements réciproques qui, conjointement avec au moins un cran d'arrêt (31, 32) déverrouillable, les maintenant ensemble, forment un siège fixe, **caractérisé en ce que** les supports (27) présentent la forme d'un bloc creux, sur lequel le profilé chapeau (3) repose directement, le bloc présentant un enfoncement (28) entourant latéralement le profilé chapeau (3) sur une partie de sa hauteur et un autre enfoncement (29) sur son fond, enfoncement dans lequel une empreinte (30) du profilé chapeau (3) se pose vers le bas, et **en ce qu'**un ressort flexible (31) disposé latéralement par rapport au bloc s'engage, en tant que cran d'arrêt, à travers une découpure (33) dans le profilé chapeau (3) et, avec un élément de verrou coudé (32), par-dessus le fond du profilé chapeau (3), les crans d'arrêt (31, 32) peuvent être déverrouillés à la main, notamment avec le majeur ou l'index, et **en ce que** les crans d'arrêt (31, 32) sont agencés à l'arrière du profilé chapeau (3).

11. Répartiteur selon la revendication 10, **caractérisé en ce que** les crans d'arrêt (31, 32) sont disposés sur les côtés extérieurs des deux supports (27) vus ensemble, de préférence deux baguettes (1 ; 37) de l'infrastructure étant munies, de façon connue, des supports (27).

12. Répartiteur selon l'une quelconque des revendications 10 à 11, **caractérisé en ce que** les crans d'arrêt sont agencés sur les supports.
